# EUROPÄISCHE PATENTSCHRIFT

(11) **EP 3 111 599 B1**
(45) Veröffentlichungstag und Bekanntmachung des Hinweises auf die Patenterteilung: **04.04.2018**
(21) Anmeldenummer: 15711640.1
(22) Anmeldetag: 03.02.2015
(51) Int. Cl.: H04L 12/40

(54) **VERFAHREN UND COMPUTERNETZWERK ZUM ÜBERTRAGEN VON NACHRICHTEN**
METHOD AND COMPUTER NETWORK FOR TRANSMITTING MESSAGES
PROCÉDÉ ET RÉSEAU D'ORDINATEURS POUR LA TRANSMISSION DE MESSAGES

(30) Priorität: 24.02.2014 AT 501372014
(43) Veröffentlichungstag der Anmeldung: 04.01.2017
(73) Patentinhaber: FTS Computertechnik GmbH, 1040 Wien (AT)
(72) Erfinder: STEINER, Wilfried, A-1040 Wien (AT)
(74) Vertreter: Patentanwaltskanzlei Matschnig & Forsthuber OG
(86) Internationale Anmeldenummer: PCT/AT2015/050037
(87) Internationale Veröffentlichungsnummer: WO 2015/123710

(56) Entgegenhaltungen:
- US-A1- 2004 261 101
- US-A1- 2008 228 934
- US-A1- 2011 296 065
- US-A1- 2013 254 443

## Beschreibung

Die Erfindung betrifft ein Verfahren zur Übertragung von Nachrichten in einem Computernetzwerk, wobei das Computernetzwerk zwei oder mehrere Rechenknoten umfasst, welche Rechenkoten über einen, zwei oder mehrere Sternkoppler und/oder zumindest ein Multi-Hop Netzwerk miteinander verbunden sind, wobei jeder Rechenknoten über zumindest eine jeweils kabellose oder kabelgebundene Kommunikationsverbindung mit einem Sternkoppler oder einem Multi-Hop Netzwerk verbunden ist, und wobei die Rechenknoten untereinander und mit dem einen oder mehreren Sternkopplern und/oder Multihop Netzwerk Nachrichten austauschen. Solch ein Verfahren wird auch in der Patentanmeldung US 2011/296065 A1 offenbart. Weiters betrifft die Erfindung ein Computernetzwerk zur Übertragung von Nachrichten wobei das Computernetzwerk, insbesondere ein Echtzeit-Computernetzwerk zwei oder mehrere Rechenknoten umfasst, welche Rechenkoten über einen, zwei oder mehrere Sternkoppler und/oder zumindest ein Multi-Hop Netzwerk miteinander verbunden sind, wobei jeder Rechenknoten über zumindest eine jeweils kabellose oder kabelgebundene Kommunikationsverbindung mit einem Sternkoppler oder einem Multi-Hop Netzwerk verbunden ist, und wobei die Rechenknoten untereinander und mit dem einen oder mehreren Sternkopplern und/oder Multihop Netzwerk Nachrichten austauschen.

Die Erfindung liegt im Bereich von Computernetzwerken, insbesondere im Bereich verteilter Echtzeitsysteme, wobei ein solches Computernetzwerk, insbesondere Echtzeitsystem zum Beispiel aus folgenden Arten von aktiven Komponenten bestehen kann: Rechenknoten und Sternkoppler. Rechenknoten exekutieren Funktionen wie zum Beispiel das Messen von Eigenschaften physikalischer Prozesse mittels geeigneter Sensorik (Sensoren), die Berechnung von Stellgrößen, oder die Aktivierung von Aktuatoren, wie zum Beispiel Ventilen. Sternkoppler empfangen von Rechenknoten und/oder anderen Sternkopplern Nachrichten und leiten die Nachrichten an Rechenknoten und/oder Sternkoppler weiter. Sternkoppler sind zum Beispiel Bridges, Switches, und/oder Router in einer kabelgebunden Kommunikation oder Access Points in einer kabellosen Kommunikation. Rechenknoten sind mit anderen Rechenknoten und/oder Sternkopplern mittels kabelgebundenen oder kabellosen, vorzugsweise bidirektionalen Verbindungen (d.h., Kommunikationsverbindungen) verbunden. Des Weiteren können auch Sternkoppler durch kabelgebundene oder kabellose, vorzugsweise bidirektionale Verbindungen miteinander verbunden sein.

Für den Begriff Verbindung (Kommunikationsverbindung) wird synonym auch der Begriff Leitung oder Kommunikationsleitung verwendet und bezeichnet sowohl kabelgebundene als auch kabellose Verbindungen. Falls es von Bedeutung ist, ob die Verbindung kabellos oder kabelgebunden ist, ist dies separat hervorgehoben.

Es ist eine Aufgabe der Erfindung, in einem gemischten kabelgebundenen und kabellosen Netzwerk sicherzustellen, dass Nachrichten mit kurzer und konstanter Übertragungsdauer kommuniziert werden können.

Diese Aufgabe wird mit einem eingangs genannten Verfahren und einem eingangs genannten Computernetzwerk dadurch gelöst, dass erfindungsgemäß
-) eine erste Gruppe von Komponenten vorgesehen ist, wobei die Komponenten der ersten Gruppe Nachrichten über eine oder mehrere kabelgebundene Verbindung(en) versenden und/oder weiterleiten und/oder empfangen, wobei die erste Gruppe eine, zwei oder mehrere Komponente(n) umfasst, und wobei jede Komponente der ersten Gruppe jeweils entweder ein Rechenknoten, ein Sternkoppler oder ein Sternkoppler eines Multi-Hop Netzwerkes ist, und wobei
-) eine zweite Gruppe von Komponenten vorgesehen ist, wobei die Komponenten der zweiten Gruppe Nachrichten über eine oder mehrere kabellose Verbindungen versenden und/oder weiterleiten und/oder empfangen, wobei die zweite Gruppe eine, zwei oder mehrere Komponente(n) umfasst, und wobei jede Komponente der zweiten Gruppe jeweils entweder ein Rechenknoten oder ein Sternkoppler ist, und wobei
-) jede Komponente der ersten und der zweiten Gruppe über eine lokale Uhr verfügt, und wobei
-) die Uhren der Komponenten der ersten und der zweiten Gruppe zueinander synchronisiert sind oder miteinander synchronisiert werden, und wobei
-) die Komponenten der ersten und der zweiten Gruppe Nachrichten nach einem gemeinsamen Kommunikationsschedule koordiniert versenden und/oder weiterleiten und/oder empfangen.

Die Nachrichten werden entsprechend zeitgesteuert versendet und/oder empfangen und/oder weitergeleitet. Durch die Verwendung eines gemeinsamen Kommunikationsschedule in einem gemischten kabelgebundenen und kabellosen Netzwerk wird sichergestellt, dass Nachrichten mit kurzer und konstanter Übertragungsdauer kommuniziert werden können. Im Unterschied zum Stand der Technik ermöglicht die Erfindung, dass beliebige kabellose Segmente, d.h. Teilnetzwerke, die durch kabelgebundene Kommunikationsverbindungen verbunden sind, synchronisiert zeitgesteuerte Nachrichten austauschen können. Die Erfindung ermöglicht einem Netzwerkdesigner ein Höchstmaß an Flexibilität im Netzwerkdesign, in dem kabelgebundene Kommunikationsverbindungen durch kabellose Kommunikationsverbindungen ausgetauscht werden können.

Bevorzugte Ausführungsformen des erfindungsgemäßen Verfahrens und des erfindungsgemäßen Computernetzwerkes, welche für sich alleine oder in beliebiger Kombination miteinander realisiert sein können, sind im Folgenden beschrieben:
*) Mit Vorteil ist weiters vorgesehen, dass ein, zwei oder mehrere der Komponenten der ersten Gruppe Nachrichten auch über eine oder mehrere kabellose Verbindungen senden und/oder empfangen und/oder weiterleiten.

Dabei ist vorzugsweise vorgesehen, dass die Komponenten der ersten Gruppe, welche Nachrichten über eine oder mehrere kabellose Verbindungen senden und/oder empfangen und/oder weiterleiten, diese Nachrichten nach dem gemeinsamen Kommunikationsschedule senden und/oder empfangen und/oder weiterleiten.
*) Mit Vorteil kann zusätzlich oder alternativ vorgesehen sein, dass ein, zwei oder mehrere der Komponenten der zweiten Gruppe Nachrichten auch über eine oder mehrere kabelgebundene Verbindungen senden und/oder empfangen und/oder weiterleiten.

Mit Vorteil ist dabei vorgesehen dass die Komponenten der zweiten Gruppe, welche Nachrichten über eine oder mehrere kabelgebundene Verbindungen senden und/oder empfangen und/oder weiterleiten, diese Nachrichten nach dem gemeinsamen Kommunikationsschedule senden und/oder empfangen und/oder weiterleiten.
*) Insbesondere von Vorteil ist wenn, wenn die Sendezeitpunkte der zeitgesteuerten Nachrichten in dem Kommunikationsschedule derart gewählt sind, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

Auf diese Weise stellt das Kommunikationsschedule somit sicher, dass auf mehreren kabellosen Kommunikationsverbindungen nur dann gleichzeitig kommuniziert wird, wenn keine störende Beeinflussung eintritt, z.B. wenn die kabellosen Kommunikationsverbindungen räumlich weit genug voneinander entfernt sind, oder wenn auf unterschiedlichen Kommunikationsfrequenzen gesendet wird. Das Kommunikationsschedule legt dabei auch fest, über welche Leitungen kommuniziert wird.

Durch die kollisionsbehaftete Natur des kabellosen Übertragungsmediums ist bei einem Versuch gleichzeitiger Übertragung mehrerer Nachrichten über unterschiedliche, nahe beieinander liegende kabellose Übertragungsstrecken regelmäßig die Zerstörung oder Verzögerung einzelner Nachrichten in Kauf zu nehmen. Diese Zerstörung oder Verzögerung von Nachrichten stellt die Nutzung des kabellosen Übertragungsmediums für gewisse Anwendungszwecke im Bereich "Echtzeit-Steuerung" und anderen von Echtzeitanforderungen an die Kommunikation geprägten Anwendungszwecken in Frage.

Durch die vorliegende vorteilhafte Ausgestaltung/Erfindung kann die Zerstörung und Verzögerung von Nachrichten auf kabellosen Übertragungsmedien durch Koordinations-Maßnahmen weitestgehend vermieden und dadurch die Nutzung ebendieses Übertragungsmediums in einem gemischt kabelgebunden-kabellosen Netzwerk sinnvoll möglich gemacht werden. Die entsprechenden Koordinierungs-Maßnahmen sind entsprechend derart gestaltet, dass die kabellosen Nachrichtenübertragungen zueinander zeitlich so angeordnet und durchgeführt werden, dass eine Kollision dieser Nachrichten untereinander zuverlässig vermieden wird.
*) Vorteilhafterweise ist vorgesehen, dass die Übertragung von Nachrichten über kabelgebundene Kommunikationsverbindungen nach einem IEEE 802.3 Standard oder einem darauf aufbauenden oder nachfolgenden Standard erfolgt.
*) Vorteilhafterweise ist vorgesehen, dass die Übertragung von Nachrichten über kabellose Kommunikationsverbindungen nach einem IEEE 802.11 Standard oder einem darauf aufbauenden oder nachfolgenden Standard erfolgt oder nach einem IEEE 802.15 Standard oder einem darauf aufbauenden oder nachfolgenden Standard erfolgt.
*) Vorteilhafterweise ist vorgesehen, dass für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

Im Folgenden ist die Erfindung an Hand der Zeichnung näher erörtert. In dieser zeigt
Fig. 1 ein Beispiel eines Netzwerks, in welchem Rechenknoten mittels kabelgebundener Kommunikationsverbindungen (Kommunikationsleitungen) mit einem Sternkoppler verbunden sind,
Fig. 2 ein Netzwerk, bei welchem mehrere Sternkoppler des Netzwerkes miteinander verbunden sind und Rechenknoten des Netzwerkes jeweils nur mit einer Teilmenge dieser Sternkoppler verbunden sind,
Fig. 3 ein Beispiel für zeitgesteuerte Kommunikation an Hand eines Flussdiagramms,
Fig. 4 ein weiteres Beispiel für zeitgesteuerte Kommunikation anhand eines Flussdiagramms, Fig. 5 ein Beispiel eines Netzwerks, in welchem Rechenknoten über Kommunikationsleitungen mit Sternkopplern verbunden sind,
Fig. 6 das Ethernet Nachrichten Format als Beispiel für Nachrichten, die in einem verteilten Echtzeitsystem über kabelgebundene Verbindungen kommuniziert werden,
Fig. 7 das Nachrichten Format des IEEE 802.11 Standards als Beispiel für Nachrichten, die in einem verteilten Echtzeitsystem über kabellose Verbindungen kommuniziert werden,
Fig. 8 ein Beispiel für zeitgesteuerte Kommunikation in dem gemischten kabellosen und kabelgebundenen Netzwerk von Fig. 5 anhand eines Flussdiagramms,
Fig. 9 ein Kommunikationsschedule zu dem Flussdiagramm aus Fig. 8,
Fig. 10 ein Beispiel für zeitgesteuerte Kommunikation in dem Netzwerk aus Fig. 5 anhand eines Flussdiagramms,
Fig. 11 beispielhaft das Kommunikationsschedule zu dem Flussdiagramm in Fig. 10,
Fig. 12 ein weiteres Beispiel für zeitgesteuerte Kommunikation in dem Netzwerk aus Fig. 5 anhand eines Flussdiagramms, und
Fig. 13 beispielhaft das Kommunikationsschedule zu dem Flussdiagramm in Fig. 12.

Vorausgeschickt wird, dass der Informationsaustausch zwischen Komponenten Nachrichten-orientiert funktioniert, zum Beispiel mittels Ethernet Nachtrichten auf kabelgebundenen Verbindungen und mittels 802.11 Nachrichten über kabellose Verbindungen. Im Folgenden wird außerdem bei der Übertragung von Nachrichten nicht näher auf das Nachrichtenformat eingegangen. Im Speziellen wird nicht darauf eingegangen und der Einfachheit angenommen, dass - soweit dies vorgesehen ist - bei einem Übergang zwischen kabelgebundenen und kabellosen Verbindungen eine Übersetzung der Nachrichtenformate in standardkonforme Formate (wie zum Beispiel IEEE 802.3 und 802.11 oder 802.15) durchgeführt wird, wie dies aus dem Stand der Technik bekannt ist und hier nicht näher beschrieben werden soll.

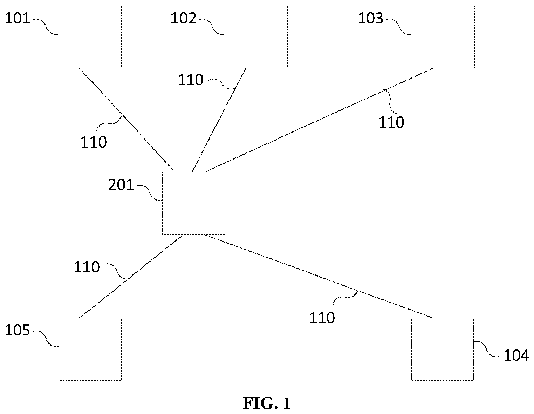

In Fig. 1 ist ein Beispiel eines Netzwerks dargestellt, in welchem Rechenknoten 101 - 105 mittels kabelgebundener Kommunikationsverbindungen (Kommunikationsleitungen) 110, bei welchen es sich vorteilhafterweise um bi-direktionale kabelgebundene Kommunikationsverbindungen handelt, mit einem Sternkoppler 201 verbunden sind. Die Rechenknoten 101 - 105 tauschen Nachrichten miteinander aus, indem sie diese an den Sternkoppler 201 schicken, und dieser die Nachrichten an die entsprechenden Empfänger weiterleitet. Des Weiteren kann ein Sternkoppler 201 auch selbst Nachrichten generieren und an Rechenknoten 101 - 105 versenden.

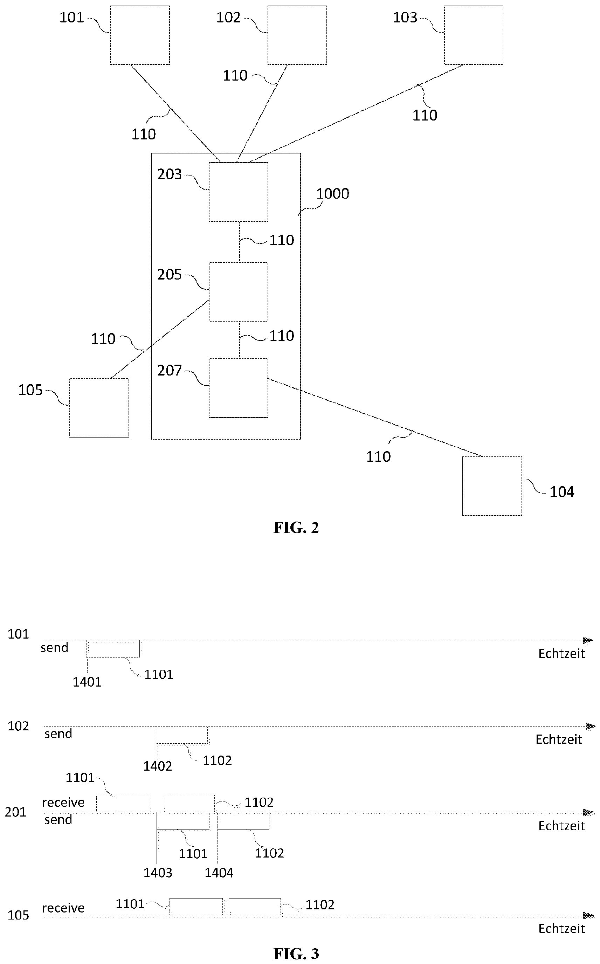

In Fig. 2 ist dargestellt, dass auch mehrere Sternkoppler 203, 205, 207 eines Netzwerkes miteinander verbunden sein können und Rechenknoten 101 - 105 des Netzwerkes jeweils nur mit einer Teilmenge dieser Sternkoppler 203, 205, 207 verbunden wird. Die Kommunikation zwischen zwei Rechenknoten kann dann auch über zwei oder mehr Sternkoppler 203, 205, 207 erfolgen. Solche Netzwerkstrukturen werden Multi-Hop Netzwerke 1000 genannt. In der folgenden Beschreibung wird nicht explizit auf Multi-Hop Netzwerke eingegangen, es ist aber bekannter Stand der Technik, dass ein einzelner Sternkoppler 201 (Fig. 1) durch ein Multi-Hop Netzwerk 1000 (Fig. 2) ersetzt werden kann.

In Fig. 3 ist anhand eines Flussdiagramms beispielhaft zeitgesteuerte Kommunikation illustriert. In diesem Beispiel übertragen die Rechenknoten 101 und 102 wie in Fig. 1 dargestellt, zeitgesteuert Nachrichten 1101 und 1102 über den Sternkoppler 201 an den Rechenknoten 105. Die Besonderheit einer zeitgesteuerten Kommunikation liegt darin, dass die Sendezeitpunkte 1401, 1402 und/oder die Weiterleitungszeitpunkte 1403, 1404 der zeitgesteuerten Nachrichten bereits vor dem Versenden der Nachricht bekannt sind. Die Sendezeitpunkte 1401, 1402 und/oder die Weiterleitungszeitpunkte 1403, 1404 können zum Beispiel bereits während des Designs des verteilten Echtzeitsystems festgelegt werden. Die Festlegung der Sendezeitpunkte, Weiterleitungszeitpunkte, Empfangszeitpunkte oder einer Teilmenge dieser Zeitpunkte wird als das Kommunikationsschedule bezeichnet. Eine Synchronisation von lokalen Uhren in den Rechenknoten und Sternkopplern ermöglicht es, dass das Kommunikationsschedule in den Rechenknoten und/oder Sternkopplern synchron ausgeführt wird. Zur Synchronisation der lokalen Uhren kann ein Uhrensynchronisationsprotokoll verwendet werden, wie zum Beispiel SAE AS6802, IEEE 1588, oder IEEE 802.1AS.

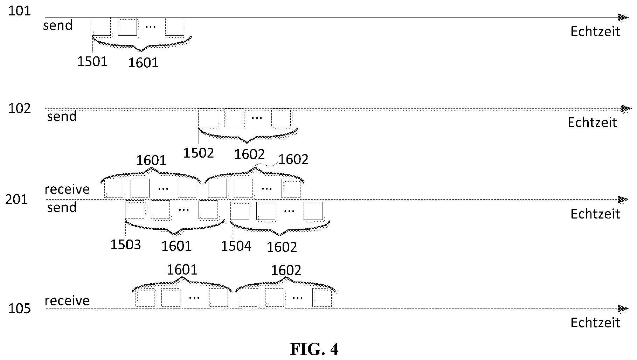

In Fig. 4 ist ein weiteres Beispiel anhand eines Flussdiagramms dargestellt, welches zeitgesteuerte Kommunikation illustriert. Hier werden einem Sendezeitpunkt 1501, 1502 und einem Weiterleitungszeitpunkt 1503, 1504 jeweils Gruppen 1601, 1602 von zeitgesteuerten Nachrichten zugeordnet. Wie in Fig. 4 dargestellt bleibt die Zuordnung von Nachrichten zu den Gruppen 1601, 1602 bestehen. Dies ist allerdings nicht notwendigerweise der Fall, so könnte der Sternkoppler 201 nur den Weiterleitungszeitpunkt 1503 implementieren und, wenn der Weiterleitungszeitpunkte 1503 erreicht ist, alle Nachrichten der Gruppen 1601 und 1602 weiterleiten. Im Allgemeinen kann sich die Zuordnung von Nachricht zu einer Gruppe pro Rechenknoten und Sternkoppler beliebig neu gestalten.

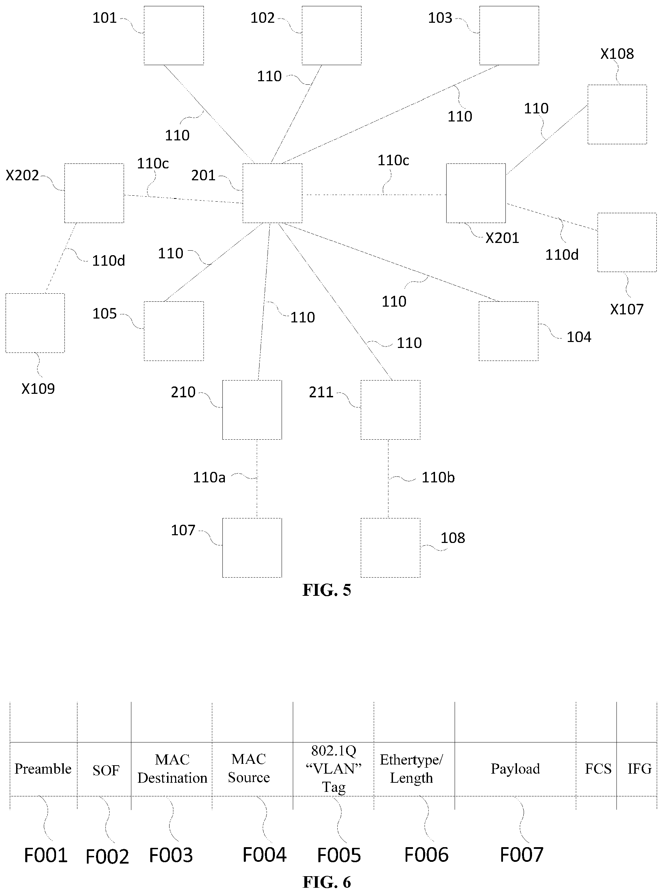

In Fig. 5 ist ein Beispiel eines Netzwerks gezeigt, in welchem Rechenknoten 101 - 108, X107, X108, X109 über vorzugsweise bi-direktionale Kommunikationsleitungen 110, 110a, 110b, 110c, 110d mit einem oder mehreren Sternkopplern 201, 210, 211, X201, X202 verbunden sind. Die vorzugsweise bi-direktionalen Kommunikationsleitungen 110a, 110b, 110c, 110d sind in diesem Beispiel kabellos ausgeführt, die vorzugsweise bi-direktionalen Kommunikationsleitungen 110 sind kabelgebunden ausgeführt.

Im Sinne der vorliegenden Erfindung sind die Komponenten 101 - 105, X108 ausschließlich der Gruppe 1 zugeordnet, kommunizieren also über kabelgebundene Verbindungen 110. Die Komponenten 107, 108, X107, X109, X202 gehören ausschließlich zu der Gruppe 2, kommunizieren also ausschließlich über kabellose Verbindungen 110a, 110b, 110c, 110d. Die Komponenten 201, X201, 210, 211 können sowohl über kabelgebundene als auch kabellose Verbindungen kommunizieren, gehören somit nach dieser Terminologie sowohl zu Gruppe 1 also auch zu Gruppe 2.

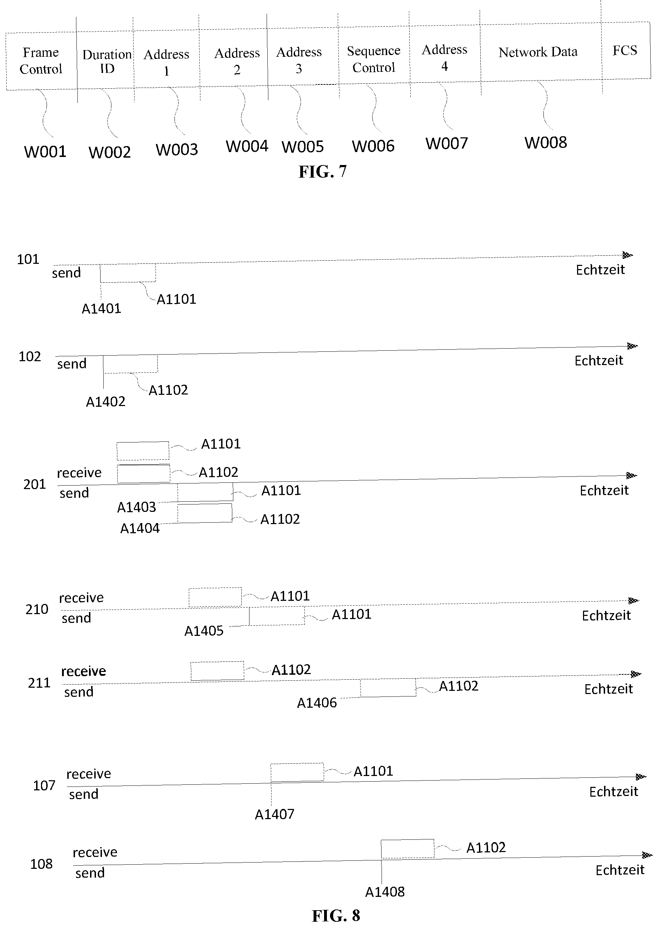

Erfindungsgemäß sind die lokalen Uhren dieser Komponenten zueinander synchronisiert und die Komponenten der ersten und der zweiten Gruppen kommunizieren nach einem gemeinsamen Kommunikationsschedule, wie dies an Hand Figur 8 noch näher erläutert wird.

In Fig. 6 ist das Ethernet Nachrichten Format dargestellt als Beispiel für Nachrichten, die in einem verteilten Echtzeitsystem über kabelgebundene Verbindungen kommuniziert werden können. Wie dargestellt besteht das Ethernet Nachrichten Format aus unterschiedlichen Feldern F001 - F007, FCS, IFG.

In Fig. 7 ist das Nachrichten Format des IEEE 802.11 Standards dargestellt als Beispiel für Nachrichten, die in einem verteilten Echtzeitsystem über kabellose Verbindungen kommuniziert werden können. Wie dargestellt besteht das Nachrichten Format aus unterschiedlichen Feldern W001 - W008, FCS.

In Fig. 8 ist ein Beispiel anhand eines Flussdiagramms dargestellt, welches zeitgesteuerte Kommunikation in dem gemischten kabellosen und kabelgebundenen Netzwerk von Fig. 5 illustriert. Das Beispiel startet mit Rechenknoten 101, der zum Zeitpunkt A1401 eine zeitgesteuerte Nachricht A1101 an den Sternkoppler 201 versendet. Ungefähr zur gleichen Zeit versendet Rechenknoten 102 ebenfalls eine zeitgesteuerte Nachricht A1102 an den Sternkoppler 201. Sternkoppler 201 empfängt beide Nachrichten A1101 und A1102 und leitet sie zu den Zeitpunkten A1403 und A1404 zu den jeweiligen Sternkopplern 210 und 211 weiter. Die Kommunikation zwischen den Rechenknoten 101, 102 und den Sternkopplern 201, 210, 211 erfolgt über eine kabelgebundene Kommunikationsverbindung 110, über die zur gleichen Zeit unterschiedliche Nachrichten übertragen werden können. Die beiden Sternkoppler 210 und 211 leiten die jeweiligen Nachrichten je über eine kabellose Kommunikationsverbindung 110a, 110b an die beiden Rechenknoten 107 und 108 weiter. In diesem Beispiel gehen wir davon aus, dass bei der gleichzeitigen Weiterleitung über die kabellose Verbindung die Nachrichten A1101 und A1102 sich gegenseitig stören würden, zum Beispiel weil beide Übertragungen in der gleichen Sendefrequenz stattfinden würden. Daher wird das Kommunikationsschedule der zeitgesteuerten Kommunikation derart gewählt, dass die beiden Sternkoppler 210 und 211 Nachrichten A1101 und A1102 zu unterschiedlichen Zeitpunkten A1405, A1406 weiterleiten. Wie in Fig. 8 gezeigt, empfangen die beiden Rechenknoten 107 und 108 die Nachrichten über die kabellose Kommunikationsleitungen daher zeitversetzt (Zeitpunkte A1407, A1408), entsprechend dem Kommunikationsschedule. Durch den zeitlichen Versatz, der durch das Kommunikationsschedule vorgegeben wird, ist sichergestellt dass die Übertragungen der beiden Nachrichten A1101 und A1102 sich gegenseitig nicht stören.

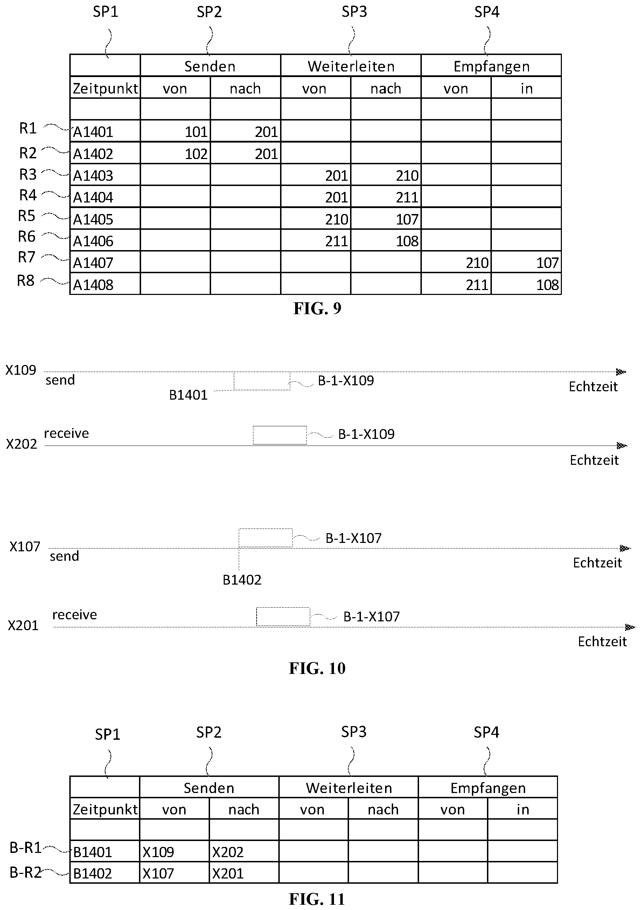

In Fig. 9 ist beispielhaft das Kommunikationsschedule zu dem Flussdiagramm in Fig. 8 tabellarisch dargestellt. Die Tabelle in Fig. 9 besteht aus vier Hauptspalten und acht Einträgen in Reihen (R1-R8). Die vier Hauptspalten beschreiben: einen Zeitpunkt SP1 zu der eine Aktion ausgeführt werden soll, das Senden SP2 einer Nachricht zum Zeitpunkt SP1 von einer Komponente zu einer anderen Komponente, das Weiterleiten SP3 einer Nachricht von einer Komponente zu einer anderen Komponente, sowie das Empfangen SP4 einer Nachricht in einer Komponente von einer anderen Komponente.

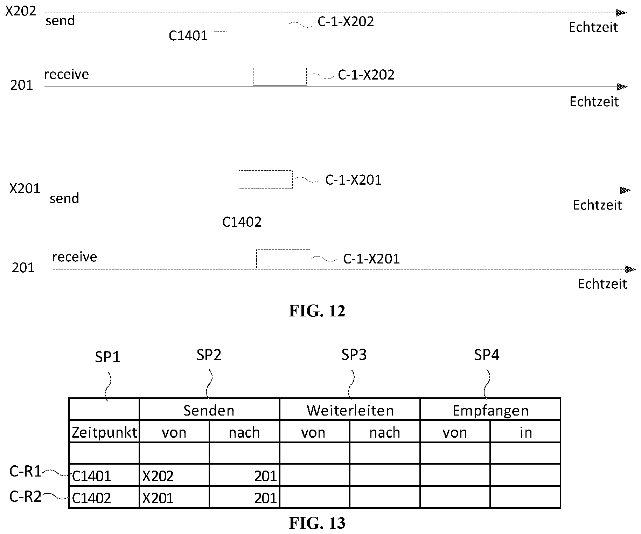

In Fig. 10 ist ein Beispiel für zeitgesteuerte Kommunikation in dem Netzwerk aus Fig. 5 anhand eines Flussdiagramms demonstriert. Dieses Beispiel beschreibt Übertragungen von Nachrichten über kabellose Kommunikationsleitungen 110d, die ungefähr zur gleichen Zeit stattfinden, nämlich zwischen dem Rechenknoten X109 und Sternkoppler X202 sowie zwischen Rechenknoten X107 und Sternkoppler X201. In diesem Beispiel wird davon ausgegangen, dass sich die Nachrichten bei gleichzeitiger Übertragung gegenseitig nicht stören; beispielsweise treten Störungen deswegen nicht auf, weil die Komponenten räumlich ausreichend weit voneinander getrennt operieren. Deshalb kann in dem Kommunikationsschedule vorgesehen sein, dass wie gezeigt die beiden Rechenknoten X109, X107 die Nachrichten B-1-X109, B-1-X107 in zeitlicher Nähe zueinander (oder auch gleichzeitig) zu den Zeitpunkten B1401, B1402 an die Sternkoppler X202, X201 übertragen (siehe Kommunikationsschedule aus Fig. 12), wo sie ebenfalls in zeitlicher Nähe zueinander (oder gleichzeitig) empfangen werden, ohne dass sich die Übertragungen dadurch stören.

In Fig. 11 ist beispielhaft das Kommunikationsschedule zu dem Flussdiagramm in Fig. 10 tabellarisch dargestellt. Die Tabelle in Fig. 11 besteht aus vier Hauptspalten und zwei Einträgen in Reihen (B-R1, B-R2). Die vier Hauptspalten beschreiben: einen Zeitpunkt SP1 zu der eine Aktion ausgeführt werden soll, das Senden SP2 einer Nachricht zum Zeitpunkt SP1 von einer Komponente zu einer anderen Komponente, das Weiterleiten SP3 einer Nachricht von einer Komponente zu einer anderen Komponente, sowie das Empfangen SP4 einer Nachricht in einer Komponente von einer anderen Komponente.

In Fig. 12 ist ein weiteres Beispiel für zeitgesteuerte Kommunikation in dem Netzwerk aus Fig. 5 anhand eines Flussdiagramms demonstriert. Wie gezeigt, beschreibt das Beispiel Übertragungen von Nachrichten über kabellose Kommunikationsleitungen 110c, die ungefähr zur gleichen Zeit stattfinden, nämlich zwischen dem Sternkoppler X202 und Sternkoppler 201 sowie zwischen Sternkoppler X201 und Sternkoppler 201. In diesem Beispiel wird davon ausgegangen, dass sich die Nachrichten bei gleichzeitiger Übertragung gegenseitig nicht stören. In diesem Fall zum Beispiel deswegen nicht, weil die Komponenten unterschiedliche Sendefrequenzen verwenden.

In Fig. 13 ist beispielhaft das Kommunikationsschedule zu dem Flussdiagramm in Fig. 12 tabellarisch dargestellt. Die Tabelle in Fig. 13 besteht aus vier Hauptspalten und zwei Einträgen in Reihen (C-R1, C-R2). Die vier Hauptspalten beschreiben: einen Zeitpunkt SP1 zu der eine Aktion ausgeführt werden soll, das Senden SP2 einer Nachricht zum Zeitpunkt SP1 von einer Komponente zu einer anderen Komponente, das Weiterleiten SP3 einer Nachricht von einer Komponente zu einer anderen Komponente, sowie das Empfangen SP4 einer Nachricht in einer Komponente von einer anderen Komponente.

Gemäß dem Kommunikationsschedule aus Fig. 13 sendet der Sternkoppler X202 zum Zeitpunkt C1401 eine Nachricht an den Sternkoppler 201, der Sternkoppler X201 sendet zum Zeitpunkt C1402 eine Nachricht an den Sternkoppler 201. Nachdem keine Störungen gegeben sind, können die Zeitpunkte C1401, C1402 nahe beieinander liegen oder zusammenfallen.

## Patentansprüche

1. Verfahren zur Übertragung von Nachrichten in einem Computernetzwerk, wobei das Computernetzwerk zwei oder mehrere Rechenknoten (101-108, X107, X108, X109) umfasst, welche Rechenkoten (101-108, X107, X108, X109) über einen, zwei oder mehrere Sternkoppler (201, 203, 205, 207, 210, 211, X201, X202) und/oder zumindest ein Multi-Hop Netzwerk (1000) miteinander verbunden sind, wobei jeder Rechenknoten (101-108, X107, X108, X109) über zumindest eine jeweils kabellose oder kabelgebundene Kommunikationsverbindung (110, 110a, 110b, 110c, 110d) mit einem Sternkoppler (201, 203, 205, 207, 210, 211, X201, X202) oder einem Multi-Hop Netzwerk (1000) verbunden ist, und wobei die Rechenknoten (101-108, X107, X108, X109) untereinander und mit dem einen oder mehreren Sternkopplern (201, 203, 205, 207, 210, 211, X201, X202) und/oder Multihop Netzwerk (1000) Nachrichten austauschen,
**dadurch gekennzeichnet, dass**
- ) eine erste Gruppe von Komponenten vorgesehen ist, wobei die Komponenten der ersten Gruppe Nachrichten über eine oder mehrere kabelgebundene Verbindung(en) (110) versenden und/oder weiterleiten und/oder empfangen, wobei die erste Gruppe eine, zwei oder mehrere Komponente(n) umfasst, und wobei jede Komponente der ersten Gruppe jeweils entweder ein Rechenknoten (101, 102, 103, 104, 105, X108), ein Sternkoppler (201, 203, 205, 207, 210, 211, X201) oder ein Sternkoppler eines Multi-Hop Netzwerkes (1000) ist, und wobei
- ) eine zweite Gruppe von Komponenten vorgesehen ist, wobei die Komponenten der zweiten Gruppe Nachrichten über eine oder mehrere kabellose Verbindungen (110a, 110b, 110c, 110d) versenden und/oder weiterleiten und/oder empfangen, wobei die zweite Gruppe eine, zwei oder mehrere Komponente(n) umfasst, und wobei jede Komponente der zweiten Gruppe jeweils entweder ein Rechenknoten (107, 108, X107, X109) oder ein Sternkoppler (201, 210, 211, X201, X202) ist, und wobei
- ) jede Komponente der ersten und der zweiten Gruppe über eine lokale Uhr verfügt, und wobei
- ) die Uhren der Komponenten der ersten und der zweiten Gruppe zueinander synchronisiert sind oder miteinander synchronisiert werden, und wobei
- ) die Komponenten der ersten und der zweiten Gruppe Nachrichten nach einem gemeinsamen Kommunikationsschedule koordiniert versenden und/oder weiterleiten und/oder empfangen.

2. Verfahren nach Anspruch 1, **dadurch gekennzeichnet, dass** ein, zwei oder mehrere der Komponenten der ersten Gruppe Nachrichten auch über eine oder mehrere kabellose Verbindungen senden und/oder empfangen und/oder weiterleiten, wobei beispielsweise die Komponenten der ersten Gruppe, welche Nachrichten über eine oder mehrere kabellose Verbindungen senden und/oder empfangen und/oder weiterleiten, diese Nachrichten nach dem gemeinsamen Kommunikationsschedule senden und/oder empfangen und/oder weiterleiten.

3. Verfahren nach Anspruch 1 oder 2, **dadurch gekennzeichnet, dass** ein, zwei oder mehrere der Komponenten der zweiten Gruppe Nachrichten auch über eine oder mehrere kabelgebundene Verbindungen senden und/oder empfangen und/oder weiterleiten, wobei beispielsweise die Komponenten der zweiten Gruppe, welche Nachrichten über eine oder mehrere kabelgebundene Verbindungen senden und/oder empfangen und/oder weiterleiten, diese Nachrichten nach dem gemeinsamen Kommunikationsschedule senden und/oder empfangen und/oder weiterleiten.

4. Verfahren nach einem der Ansprüche 1 bis 3, **dadurch gekennzeichnet, dass** die Sendezeitpunkte der zeitgesteuerten Nachrichten in dem Kommunikationsschedule derart gewählt sind, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

5. Verfahren nach einem der Ansprüche 1 bis 4, **dadurch gekennzeichnet, dass** die Übertragung von Nachrichten über kabelgebundene Kommunikationsverbindungen nach einem IEEE 802.3 Standard oder einem darauf aufbauenden oder nachfolgenden Standard basiert.

6. Verfahren nach einem der Ansprüche 1 bis 5, **dadurch gekennzeichnet, dass** die Übertragung von Nachrichten über kabellose Kommunikationsverbindungen nach dem IEEE 802.11 Standard oder einem darauf aufbauenden oder nachfolgenden Standard basiert oder nach einem IEEE 802.15 Standard oder einem darauf aufbauenden oder nachfolgenden Standard basiert.

7. Verfahren nach einem der Ansprüche 1 bis 6, **dadurch gekennzeichnet, dass** für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

8. Computernetzwerk zur Übertragung von Nachrichten, wobei das Computernetzwerk zwei oder mehrere Rechenknoten (101-108, X107, X108, X109) umfasst, welche Rechenkoten (101-108, X107, X108, X109) über einen, zwei oder mehrere Sternkoppler (201, 203, 205, 207, 210, 211, X201, X202) und/oder zumindest ein Multi-Hop Netzwerk (1000) miteinander verbunden sind, wobei jeder Rechenknoten (101-108, X107, X109) über zumindest eine jeweils kabellose oder kabelgebundene Kommunikationsverbindung (110, 110a, 110b, 110c, 110d) mit einem Sternkoppler (201, 203, 205, 207, 210, 211, X201, X202) oder einem Multi-Hop Netzwerk (1000) verbunden ist, und wobei die Rechenknoten (101-108, X107, X108, X109) untereinander und mit dem einen oder mehreren Sternkopplern (201, 203, 205, 207, 210, 211, X201, X202) und/oder Multihop Netzwerk (1000) Nachrichten austauschen,
**dadurch gekennzeichnet, dass**
- ) eine erste Gruppe von Komponenten vorgesehen ist, wobei die Komponenten der ersten Gruppe Nachrichten über eine oder mehrere kabelgebundene Verbindung(en) (110) versenden und/oder weiterleiten und/oder empfangen, wobei die erste Gruppe eine, zwei oder mehrere Komponente(n) umfasst, und wobei jede Komponente der ersten Gruppe jeweils entweder ein Rechenknoten (101, 102, 103, 104, 105, X108), ein Sternkoppler (201, 203, 205, 207, 210, 211, X201) oder ein Sternkoppler eines Multi-Hop Netzwerkes (1000) ist, und wobei
- ) eine zweite Gruppe von Komponenten vorgesehen ist, wobei die Komponenten der zweiten Gruppe Nachrichten über eine oder mehrere kabellose Verbindungen (110a, 110b, 110c, 110d) versenden und/oder weiterleiten und/oder empfangen, wobei die zweite Gruppe eine, zwei oder mehrere Komponente(n) umfasst, und wobei jede Komponente der zweiten Gruppe jeweils entweder ein Rechenknoten (107, 108, X107, X109) oder ein Sternkoppler (201, 210, 211, X201, X202) ist, und wobei
- ) jede Komponente der ersten und der zweiten Gruppe über eine lokale Uhr verfügt, und wobei
- ) die Uhren der Komponenten der ersten und der zweiten Gruppe zueinander synchronisiert sind oder miteinander synchronisiert werden, und wobei
- ) die Komponenten der ersten und der zweiten Gruppe Nachrichten nach einem gemeinsamen Kommunikationsschedule koordiniert versenden und/oder weiterleiten und/oder empfangen.

9. Computernetzwerk nach Anspruch 8, **dadurch gekennzeichnet, dass** ein, zwei oder mehrere der Komponenten der ersten Gruppe Nachrichten auch über eine oder mehrere kabellose Verbindungen senden und/oder empfangen und/oder weiterleiten, wobei beispielsweise die Komponenten der ersten Gruppe, welche Nachrichten über eine oder mehrere kabellose Verbindungen senden und/oder empfangen und/oder weiterleiten, diese Nachrichten nach dem gemeinsamen Kommunikationsschedule senden und/oder empfangen und/oder weiterleiten.

10. Computernetzwerk nach Anspruch 8 oder 9, **dadurch gekennzeichnet, dass** ein, zwei oder mehrere der Komponenten der zweiten Gruppe Nachrichten auch über eine oder mehrere kabelgebundene Verbindungen senden und/oder empfangen und/oder weiterleiten, wobei beispielsweise die Komponenten der zweiten Gruppe, welche Nachrichten über eine oder mehrere kabelgebundene Verbindungen senden und/oder empfangen und/oder weiterleiten, diese Nachrichten nach dem gemeinsamen Kommunikationsschedule senden und/oder empfangen und/oder weiterleiten.

11. Computernetzwerk nach einem der Ansprüche 8 bis 10, **dadurch gekennzeichnet, dass** die Sendezeitpunkte der zeitgesteuerten Nachrichten in dem Kommunikationsschedule derart gewählt sind, dass zeitgesteuerte Nachrichten gleichzeitig oder überlappend nur auf jenen kabellosen Kommunikationsverbindungen gesendet werden, bei welchen keine störende Beeinflussung der Nachrichtenübertragung gegeben ist.

12. Computernetzwerk nach einem der Ansprüche 8 bis 11, **dadurch gekennzeichnet, dass** die Übertragung von Nachrichten über kabelgebundene Kommunikationsverbindungen nach einem IEEE 802.3 Standard oder einem darauf aufbauenden oder nachfolgenden Standard basiert.

13. Computernetzwerk nach einem der Ansprüche 8 bis 12, **dadurch gekennzeichnet, dass** die Übertragung von Nachrichten über kabellose Kommunikationsverbindungen nach einem IEEE 802.11 Standard oder einem darauf aufbauenden oder nachfolgenden Standard basiert oder nach einem IEEE 802.15 Standard oder einem darauf aufbauenden oder nachfolgenden Standard basiert.

14. Computernetzwerk nach einem der Ansprüche 8 bis 13, **dadurch gekennzeichnet, dass** für zeitgesteuerte Kommunikation einer oder mehrere der folgenden Standards oder darauf aufbauende oder nachfolgende Standards verwendet wird/werden: SAE AS6802, IEEE 802.1Q, IEEE 802.1AS, IEEE 1588.

## Claims

1. A method for transmitting messages in a computer network, wherein the computer network comprises two or more computing nodes (101-108, X107, X109), which computing nodes (101-108, X107, X108, X109) are interconnected via one, two, or more star couplers (201, 203, 205, 207, 210, 211, X201, X202) and/or at least one multi-hop network (1000), wherein each computing node (101-108, X107, X108, X109) is connected to a star coupler (201, 203, 205, 207, 210, 211, X201, X202) or a multi-hop network (1000) via at least one wireless or wired communications link (110, 110a, 110b, 110c, 110d), and wherein the computing nodes (101-108, X107, X108, X109) exchange messages with one another and with the one or more star couplers (201, 203, 205, 207, 210, 211, X201, X202) and/or multi-hop network (1000),
**characterised in that**
- ) a first group of components is provided, wherein the components of the first group send and/or forward and/or receive messages via one or more wired link(s) (110), wherein the first group comprises one, two, or more component(s), and wherein each component of the first group is either a computing node (101, 102, 103, 104, 105, X108), a star coupler (201, 203, 205, 207, 210, 211, X201), or a star coupler of a multi-hop network (1000), and wherein
- ) a second group of components is provided, wherein the components of the second group send and/or forward and/or receive messages via one or more wireless link(s) (110a, 110b, 110c, 110d), wherein the second group comprises one, two, or more component(s), and wherein each component of the second group is either a computing node (107, 108, X107, X109) or a star coupler (201, 210, 211, X201, X202), and wherein
- ) each component of the first and the second group has a local clock, and wherein
- ) the clocks of the components of the first and the second group are synchronised to one another or are synchronised with one another, and wherein
- ) the components of the first and the second group send and/or forward and/or receive messages in a coordinated manner in accordance with a common communications schedule.

2. The method according to claim 1, **characterised in that** one, two, or more of the components of the first group also send and/or receive and/or forward messages via one or more wireless links, wherein for example the components of the first group that send and/or receive and/or forward messages via one or more wireless links send and/or receive and/or forward these messages in accordance with the common communications schedule.

3. The method according claim 1 or 2, **characterised in that** one, two, or more of the components of the second group also send and/or receive and/or forward messages via one or more wired links, wherein for example the components of the second group that send and/or receive and/or forward messages via one or more wired links send and/or receive and/or forward these messages in accordance with the common communications schedule.

4. The method according to any one of claims 1 to 3, **characterised in that** the sending times of the time-triggered messages in the communications schedule are selected in such a way that time-triggered messages are sent at the same time or in an overlapping manner only over those wireless communications links with which there is no disturbance of the message transmission.

5. The method according to any one of claims 1 to 4, **characterised in that** messages are transmitted via wired communications links in accordance with an IEEE 802.3 standard or a standard based thereon or following on therefrom.

6. The method according to any one of claims 1 to 5, **characterised in that** messages are transmitted via wireless communications links in accordance with the IEEE 802.11 standard or a standard based thereon or following on therefrom or in accordance with an IEEE 802.15 standard or a standard based thereon or following on therefrom.

7. The method according to any one of claims 1 to 6, **characterised in that** one or more of the following standards or standards based thereon or following on therefrom is/are used for time-triggered communication: SAE AS6802, IEEE 802.1Q, IEEE 802.1AS, IEEE 1588.

8. A computer network for transmitting messages, wherein the computer network comprises two or more computing nodes (101-108, X107, X108, X109), which computing nodes (101-108, X107, X108, X109) are interconnected via one, two, or more star couplers (201, 203, 205, 207, 210, 211, X201, X202) and/or at least one multi-hop network (1000), wherein each computing node (101-108, X107, X108, X109) is connected to a star coupler (201,203, 205, 207, 210, 211, X201, X202) or a multi-hop network (1000) via at least one wireless or wired communications link (110, 110a, 110b, 110c, 110d), and wherein the computing nodes (101-108, X107, X108, X109) exchange messages with one another and with the one or more star couplers (201,203,205, 207,210, 211, X201, X202) and/or multi-hop network (1000),
**characterised in that**
- ) a first group of components is provided, wherein the components of the first group send and/or forward and/or receive messages via one or more wired link(s) (110), wherein the first group comprises one, two, or more component(s), and wherein each component of the first group is either a computing node (101, 102, 103, 104, 105, X108), a star coupler (201,203, 205, 207, 210, 211, X201), or a star coupler of a multi-hop network (1000), and wherein
- ) a second group of components is provided, wherein the components of the second group send and/or forward and/or receive messages via one or more wireless link(s) (110a, 110b, 110c, 110d), wherein the second group comprises one, two, or more component(s), and wherein each component of the second group is either a computing node (107, 108, X107, X109) or a star coupler (201, 210, 211, X201, X202), and wherein
- ) each component of the first and the second group has a local clock, and wherein
- ) the clocks of the components of the first and the second group are synchronised to one another or are synchronised with one another, and wherein
- ) the components of the first and the second group send and/or forward and/or receive messages in a coordinated manner in accordance with a common communications schedule.

9. The computer network according to claim 8, **characterised in that** one, two, or more of the components of the first group also send and/or receive and/or forward messages via one or more wireless links, wherein for example the components of the first group that send and/or receive and/or forward messages via one or more wireless links send and/or receive and/or forward these messages in accordance with the common communications schedule.

10. The computer network according claim 8 or 9, **characterised in that** one, two, or more of the components of the second group also send and/or receive and/or forward messages via one or more wired links, wherein for example the components of the second group that send and/or receive and/or forward messages via one or more wired links send and/or receive and/or forward these messages in accordance with the common communications schedule.

11. The computer network according to any one of claims 8 to 10, **characterised in that** the sending times of the time-triggered messages in the communications schedule are selected in such a way that time-triggered messages are sent at the same time or in an overlapping manner only over those wireless communications links with which there is no disturbance of the message transmission.

12. The computer network according to any one of claims 8 to 11, **characterised in that** messages are transmitted via wired communications links in accordance with an IEEE 802.3 standard or a standard based thereon or following on therefrom.

13. The computer network according to any one of claims 8 to 12, **characterised in that** messages are transmitted via wireless communications links in accordance with the IEEE 802.11 standard or a standard based thereon or following on therefrom or in accordance with an IEEE 802.15 standard or a standard based thereon or following on therefrom.

14. The computer network according to any one of claims 8 to 13, **characterised in that** one or more of the following standards or standards based thereon or following on therefrom is/are used for time-triggered communication: SAE AS6802, IEEE 802.1Q, IEEE 802.1AS, IEEE 1588.

## Revendications

1. - Procédé pour la transmission de messages dans un réseau d'ordinateurs, dans lequel le réseau d'ordinateurs comporte au moins deux noeuds de calcul (101-108, X107, X108, X109), lesquels noeuds de calcul (101-108, X107, X109) sont interconnectés par l'intermédiaire d'un, deux ou au moins deux coupleurs en étoile (201, 203, 205, 207, 210, 211, X201, X202) et/ou d'au moins un réseau à sauts multiples (1000), dans lequel chaque noeud de calcul (101-108, X107, X109) est connecté à un coupleur en étoile (201, 203, 205, 207, 210, 211, X201, X202) ou à un réseau à sauts multiples (1000) par l'intermédiaire d'au moins une liaison de communication sans fil ou filaire respective (110, 110a, 110b, 110c, 110d), et dans lequel les noeuds de calcul (101-108, X107, X108, X109) échangent des messages entre eux et avec ledit au moins un coupleur en étoile (201, 203, 205, 207, 210, 211, X201, X202) et/ou réseau à sauts multiples (1000),
**caractérisé par le fait que**
- ) un premier groupe de composants est prévu, les composants du premier groupe envoyant et/ou transférant et/ou recevant des messages par l'intermédiaire d'une ou plusieurs liaisons filaires (110), le premier groupe comportant un, deux ou au moins deux composants, et chaque composant du premier groupe étant un noeud de calcul (101, 102, 103, 104, 105, X108) ou un coupleur en étoile (201, 203, 205, 207, 210, 211, X201) ou un coupleur en étoile d'un réseau à sauts multiples (1000) ; et dans lequel
- ) un second groupe de composants est prévu, les composants du second groupe envoyant et/ou transférant et/ou recevant des messages par l'intermédiaire d'une ou plusieurs liaisons sans fil (110a, 110b, 110c, 110d), le second groupe comportant un, deux ou au moins deux composants, et chaque composant du second groupe étant soit un noeud de calcul (116, 108, X116, X109) soit un coupleur en étoile (201, 210, 211, X201, X202) ; et dans lequel
- ) chaque composant du premier et du second groupe dispose d'une horloge locale ; et dans lequel
- ) les horloges des composants du premier et du second groupe sont synchronisées les unes sur les autres ou sont synchronisées les unes avec les autres ; et dans lequel
- ) les composants du premier et du second groupe envoient et/ou transfèrent et/ou reçoivent des messages d'une manière coordonnée conformément à un plan de communication commun.

2. - Procédé selon la revendication 1, **caractérisé par le fait qu'**un, deux ou au moins deux des composants du premier groupe envoient et/ou reçoivent et/ou transfèrent des messages également par l'intermédiaire d'une ou plusieurs liaisons sans fil, par exemple les composants du premier groupe, lesquels envoient et/ou reçoivent et/ou transfèrent des messages par l'intermédiaire d'une ou plusieurs liaisons sans fil, envoyant et/ou recevant et/ou transférant ces messages conformément au plan de communication commun.

3. - Procédé selon l'une des revendications 1 ou 2, **caractérisé par le fait que** un, deux ou au moins deux des composants du second groupe envoient et/ou reçoivent et/ou transfèrent des messages également par l'intermédiaire d'une ou plusieurs liaisons filaires, par exemple les composants du second groupe, lesquels envoient et/ou reçoivent et/ou transfèrent des messages par l'intermédiaire d'une ou plusieurs liaisons filaires, envoyant et/ou recevant et/ou transférant ces messages conformément au plan de communication commun.

4. - Procédé selon l'une des revendications 1 à 3, **caractérisé par le fait que** les moments d'envoi des messages à déclenchement temporel dans le plan de communication sont choisis d'une telle façon que les messages à déclenchement temporel sont envoyés simultanément ou de façon chevauchante uniquement sur les liaisons de communication sans fil pour lesquelles il n'y a pas d'interférence de la transmission de messages.

5. - Procédé selon l'une des revendications 1 à 4, **caractérisé par le fait que** la transmission de messages par l'intermédiaire de liaisons de communication filaires se fonde sur une norme IEEE 802.3 ou une norme reposant sur celle-ci ou lui faisant suite.

6. - Procédé selon l'une des revendications 1 à 5, **caractérisé par le fait que** la transmission de messages par l'intermédiaire de liaisons de communication sans fil se fonde sur la norme IEEE 802.11 ou sur une norme reposant sur celle-ci ou lui faisant suivant ou sur une norme IEEE 802.15 ou sur une norme reposant sur celle-ci ou lui faisant suite.

7. - Procédé selon l'une des revendications 1 à 6, **caractérisé par le fait que,** pour une communication à déclenchement temporel, une ou plusieurs des normes suivantes ou des normes reposant sur celles-ci ou leur faisant suite est/sont utilisées : SAA AS6802, IEEE 802.1Q, IEEE 802.1AS, IEEE 1588.

8. - Réseau d'ordinateurs pour la transmission de messages, dans lequel le réseau d'ordinateurs comporte deux ou au moins deux noeuds de calcul (101-108, X116, X109), lesquels noeuds de calcul (101-108, X116, X108, X109) sont interconnectés par l'intermédiaire d'un, deux ou au moins deux coupleurs en étoile (201, 203, 205, 207, 210, 211, X201, X202) et/ou au moins un réseau à sauts multiples (1000), dans lequel chaque noeud de calcul (101-108, X116, X109) est connecté à un coupleur en étoile (201, 203, 205, 207, 210, 211, X201, X202) ou à un réseau à sauts multiples (1000) par l'intermédiaire d'au moins une liaison de communication sans fil ou filaire respective (110, 110a, 110b, 110c, 110d), et dans lequel les noeuds de calcul (101-108, X116, X109) échangent des messages entre eux et avec ledit au moins un coupleur en étoile (201, 203, 205, 207, 210, 211, X201, X202) et/ou réseau à sauts multiples (1000)
**caractérisé par le fait que**
- ) un premier groupe de composants est prévu, les composants du premier groupe envoyant et/ou transférant et/ou recevant des messages par l'intermédiaire d'une ou plusieurs liaisons filaires (110), le premier groupe comportant un, deux ou au moins deux composants, et chaque composant du premier groupe étant un noeud de calcul (101, 102, 103, 104, 105, X108) ou un coupleur en étoile (201, 203, 205, 207, 210, 211, X201) ou un coupleur en étoile d'un réseau à sauts multiples (1000) ; et dans lequel
- ) un second groupe de composants est prévu, les composants du second groupe envoyant et/ou transférant et/ou recevant des messages par l'intermédiaire d'une ou plusieurs liaisons sans fil (110a, 110b, 110c, 110d), le second groupe comportant un, deux ou au moins deux composants, et chaque composant du second groupe étant soit un noeud de calcul (107, 108, X107, X109) soit un coupleur en étoile (201, 210, 211, X201, X202) ; et dans lequel
- ) chaque composant du premier et du second groupe dispose d'une horloge locale ; et dans lequel
- ) les horloges des composants du premier et du second groupe sont synchronisées les unes sur les autres ou sont synchronisées les unes avec les autres ; et dans lequel
- ) les composants du premier et du second groupe envoient et/ou transfèrent et/ou reçoivent des messages d'une manière coordonnée conformément à un plan de communication commun.

9. - Réseau d'ordinateurs selon la revendication 8, **caractérisé par le fait qu'**un, deux ou au moins deux des composants du premier groupe envoient et/ou reçoivent et/ou transfèrent des messages également par l'intermédiaire d'une ou plusieurs liaisons sans fil, par exemple les composants du premier groupe, lesquels envoient et/ou reçoivent et/ou transfèrent des messages par l'intermédiaire d'une ou plusieurs liaisons sans fil, envoyant et/ou recevant et/ou transférant ces messages conformément au plan de communication commun.

10. - Réseau d'ordinateurs selon l'une des revendications 8 ou 9, **caractérisé par le fait qu'**un, deux ou au moins deux des composants du second groupe envoient et/ou reçoivent et/ou transfèrent des messages également par une ou plusieurs liaisons filaires, par exemple les composants du second groupe, lesquels envoient et/ou reçoivent et/ou transfèrent des messages par l'intermédiaire d'une ou plusieurs liaisons filaires, envoyant et/ou recevant et/ou transférant ces messages conformément au plan de communication commun.

11. - Réseau d'ordinateurs selon l'une des revendications 8 à 10, **caractérisé par le fait que** les moments d'envoi des messages à déclenchement temporel dans le plan de communication sont choisis de telle sorte que des messages à déclenchement temporel sont envoyés simultanément ou de façon chevauchante uniquement sur les liaisons de communication sans fil pour lesquelles il n'y a pas d'interférence de la transmission de messages.

12. - Réseau d'ordinateurs selon l'une des revendications 8 à 11, **caractérisé par le fait que** la transmission de message par l'intermédiaire de liaisons de communication filaires se fonde sur une norme IEEE 802.3 ou sur une norme reposant sur celle-ci ou lui faisant suite.

13. - Réseau d'ordinateurs selon l'une des revendications 8 à 12, **caractérisé par le fait que** la transmission de message par l'intermédiaire de liaisons de communication sans fil se fonde sur une norme IEEE 802.11 ou sur une norme reposant sur celle-ci ou lui faisant suite ou se fonde sur une norme IEEE 802.15 ou sur une norme reposant sur celle-ci ou lui faisant suite.

14. - Réseau d'ordinateurs selon l'une des revendications 8 à 13, **caractérisé par le fait que,** pour une communication à déclenchement temporel, une ou plusieurs des normes suivantes ou des normes se fondant sur celles-ci ou leur faisant suite est/sont utilisées : SAA AS6802, IEEE 802.1Q, IEEE 802.1AS, IEEE 1588.
